# EUROPEAN PATENT APPLICATION

(11) **EP 4 317 386 A1**
(43) Date of publication of application: **07.02.2024**
(21) Application number: 22781213.8
(22) Date of filing: 31.03.2022
(51) Int. Cl.: C10N 30/00, C10N 30/06, C10N 40/00, C10N 40/02, C10N 40/04, C10N 40/06, C10N 40/08, C10N 40/30, C10M 145/14, C10M 149/02, C10M 149/10

(54) **LUBRICATING OIL ADDITIVE COMPOSITION AND LUBRICATING OIL COMPOSITION**

(30) Priority: 31.03.2021 JP 2021062411
(71) Applicant: Idemitsu Kosan Co., Ltd, Tokyo 100-8321 (JP)
(72) Inventor: KATO, Shota, Tokyo 100-8321 (JP); YOSHIDA, Yukio, Tokyo 100-8321 (JP)
(74) Representative: Hoffmann Eitle
(86) International application number: PCT/JP2022/016423
(87) International publication number: WO 2022/211003

(57) **Abstract**

A problem to be solved is to provide a lubricating oil additive composition containing a polymer-based compound that is excellent in solubility in a mineral oil and in wear resistance, and is favorable as a friction modifier, and a lubricating oil composition containing the lubricating oil additive composition. The problem is solved by a lubricating oil additive composition containing a copolymer (X) containing the following structural units (a) to (c): a structural unit (a): a structural unit derived from a monomer (A) having a (meth)acryloyl group and a linear or branched alkyl group having 6 or more and 24 or less carbon atoms, a structural unit (b): a structural unit derived from a monomer (B) having a (meth)acryloyl group and a polar group, and a structural unit (c): a structural unit derived from a monomer (C) having a polymerizable functional group and a cyclic structure group, the copolymer (X) having a content of the structural unit (a) of 43% by mol or more based on the total structural units of the copolymer (X), and a mass average molecular weight (Mw) of 5,000 or more and 90,000 or less.

## Description

### Technical Field

The present invention relates to a lubricating oil additive composition and a lubricating oil composition containing the lubricating oil additive composition.

### Background Art

One of representative examples of lubricating oil additives is a friction modifier. Examples of the friction modifier having been generally used include a phosphorus-based compound, such as a phosphate ester compound, a sulfur-based compound, such as a sulfurized olefin, and a sulfur-phosphorus-based compound, such as a thiophosphate ester compound.

However, phosphorus and sulfur are highly corrosive elements. Therefore, there is a demand of development of a novel load bearing additive that does not contain a phosphorus element and a sulfur element. As the novel friction modifier of this type, polymer-based compounds have been progressively investigated in recent years (see, for example, PTL 1).

### Citation List

### Patent Literature

PTL 1: JP 2012-041407 A

### Technical Problem

However, the polymer-based compound containing only a structural unit derived from an alkyl acrylate and a structural unit derived from a hydroxyalkyl acrylate as structural units proposed in PTL 1 is insufficient in wear resistance.

Furthermore, the polymer-based compound may cause white turbidity in some cases in dissolving in a mineral oil that is generally used as a lubricant base oil. The occurrence of white turbidity means insufficient solubility of the polymer-based compound, and thereby the function of the polymer-based compound cannot be sufficiently exerted in some cases. Moreover, deposition may occur under a low temperature environment. Therefore, the polymer-based compound used as a friction modifier is demanded to be excellent in solubility in a mineral oil.

Under the circumstances, a problem to be solved by the present invention is to provide a lubricating oil additive composition containing a polymer-based compound that is excellent in solubility in a mineral oil and in wear resistance, and is favorable as a friction modifier, and a lubricating oil composition containing the lubricating oil additive composition.

### Solution to Problem

The present inventors have made earnest investigations for solving the problem. As a result, it has been found that the problem can be solved by a copolymer containing structural units derived from particular monomers, and the present invention has been completed.

Specifically, the present invention relates to the following items [1] to [3],
[1] A lubricating oil additive composition containing a copolymer (X) containing the following structural units (a) to (c):
   - a structural unit (a): a structural unit derived from a monomer (A) having a (meth)acryloyl group and a linear or branched alkyl group having 6 or more and 24 or less carbon atoms,
   - a structural unit (b): a structural unit derived from a monomer (B) having a (meth)acryloyl group and a polar group, and
   - a structural unit (c): a structural unit derived from a monomer (C) having a polymerizable functional group and a cyclic structure group,
      the copolymer (X) having
      a content of the structural unit (a) of 43% by mol or more based on the total structural units of the copolymer (X), and
      a mass average molecular weight (Mw) of 5,000 or more and 90,000 or less.
[2] A lubricating oil composition containing the lubricating oil additive composition according to the item [1] and a lubricant base oil.
[3] A method for producing the lubricating oil additive composition according to the item [1], including
   a step (S) of producing a copolymer (X) through polymerization of the following monomers (A) to (C):
   - a monomer (A): a monomer having a (meth)acryloyl group and a linear or branched alkyl group having 6 or more and 24 or less carbon atoms,
   - a monomer (B): a monomer having a (meth)acryloyl group and a polar group, and
   - a monomer (C): a monomer having a polymerizable functional group and a cyclic structure group.

### Advantageous Effects of Invention

The present invention can provide a lubricating oil additive composition containing a polymer-based compound that is excellent in solubility in a mineral oil and in wear resistance, and is favorable as a friction modifier, and a lubricating oil composition containing the lubricating oil additive composition.

### Description of Embodiments

The lower limit values and the upper limit values of the numerical ranges described in the description herein each may be optionally combined. For example, in the case where "A to B" and "C to D" are described as numerical ranges, numerical ranges of "A to D" and "C to B" are also encompassed in the scope of the present invention.

The numerical range of "(lower limit value) to (upper limit value)" described in the description herein means the lower limit value or more and the upper limit value or less unless otherwise indicated.

In the description herein, the numerical values in the examples each are a numerical value that can be used as an upper limit value or a lower limit value.

In the description herein, the "(meth) acrylate" means an acrylate or a methacrylate, which is also applied to the analogous terms.

In the description herein, the "number of ring carbon atoms" means the number of carbon atoms of atoms constituting a ring of a compound having a structure including atoms connected to form the ring. In the case where the ring is substituted with a substituent, carbon atoms included in the substituent are not included in the number of ring carbon atoms. The "numbers of ring carbon atoms" described later are the same unless otherwise indicated. For example, a benzene ring has a number of ring carbon atoms of 6. In the case where a benzene ring is substituted, for example, with an alkyl group as a substituent, the number of carbon atoms of the alkyl group is not included in the number of ring carbon atoms of the benzene ring. Therefore, the number of ring carbon atoms of a benzene ring substituted with an alkyl group is 6.

In the description herein, the "number of ring atoms" means the number of atoms constituting a ring of a compound having a structure including atoms connected to form the ring. Atoms that do not constitute the ring (such as a hydrogen atom that terminates the bond of the atom constituting the ring) and atoms included in a substituent in the case where the ring is substituted with the substituent are not included in the number of ring atoms. The "numbers of ring atoms" described later are the same unless otherwise indicated. For example, a pyridine ring has a number of ring carbon atoms of 6. The numbers of hydrogen atoms bonding to a pyridine ring and atoms constituting a substituent are not included in the number of ring atoms of a pyridine ring. Therefore, the number of ring atoms of a pyridine ring having a hydrogen atom or a substituent bonded thereto is 6.

### [Embodiments of Lubricating Oil Additive Composition]

The lubricating oil additive composition of the present embodiment contains a copolymer (X).

The copolymer (X) contains the following structural units (a) to (c).
- A structural unit (a): a structural unit derived from a monomer (A) having a (meth)acryloyl group and a linear or branched alkyl group having 6 or more and 24 or less carbon atoms
- A structural unit (b): a structural unit derived from a monomer (B) having a (meth)acryloyl group and a polar group
- A structural unit (c): a structural unit derived from a monomer (C) having a polymerizable functional group and a cyclic structure group

The copolymer (X) has a content of the structural unit (a) of 43% by mol or more based on the total structural units of the copolymer (X), and a mass average molecular weight (Mw) of 5,000 or more and 90,000 or less.

The present inventors have made earnest investigations for solving the problem. As a result, it has been found that the copolymer (X) that contains a structural unit (a) derived from a monomer (A) having a (meth)acryloyl group and a linear or branched alkyl group having 6 or more and 24 or less carbon atoms, a structural unit (b) derived from a monomer (B) having a (meth)acryloyl group and a polar group, and a structural unit (c) derived from a monomer (C) having a polymerizable functional group and a cyclic structure group, and has a content of the structural unit (a) regulated to the aforementioned range and a mass average molecular weight (Mw) regulated to the aforementioned range is excellent in solubility in a lubricant base oil and in wear resistance.

The mechanism that the copolymer (X) is excellent in solubility in a lubricant base oil and in wear resistance is estimated as follows.
(1) The structural unit (a) contained in the certain amount or more secures the suitable oil solubility (i.e., the solubility in a mineral oil).
(2) The structural unit (b) contained forms a multiple point adsorption type copolymer.
(3) The structural unit (c) contained provides a molecular interaction with the cyclic structure group. As a result, the copolymer (X) that is adsorbed on the surfaces of two members facing each other generates a suitable repulsive force between the members, so as to exert a friction reducing effect.
(4) The mass average molecular weight (Mw) of the copolymer (X) that is regulated to the certain range facilitates the intervention of the copolymer (X) between the two members facing each other, so as to exert the friction reducing effect of the copolymer (X) sufficiently.

In the present embodiment, the copolymer (X) may be constituted only by the structural unit (a) derived from the monomer (A), the structural unit (b) derived from the monomer (B), and the structural unit (c) derived from the monomer (C), and may contain a structural unit other than the structural units (a), (b), and (c) in such a range that does not impair the effects of the present invention.

In the present embodiment, the total content of the structural units (a), (b), and (c) in the copolymer (X) is preferably 70% by mol to 100% by mol, more preferably 80% by mol to 100% by mol, and further preferably 90% by mol to 100% by mol, based on the total structural units of the copolymer (X).

The monomers (A) to (C) will be described in detail below.

### <Monomer (A) and Structural Unit (a)>

The monomer (A) used in the present embodiment has a (meth)acryloyl group and a linear or branched alkyl group having 6 or more and 24 or less carbon atoms.

The structural unit (a) derived from the monomer (A) mainly has a function exerting the oil solubility (i.e., the solubility in a mineral oil) in the copolymer (X).

One kind of the monomer (A) may be used alone, or two or more kinds thereof may be used in combination. Therefore, the copolymer (X) may contain one kind of the structural unit (a) derived from the monomer (A) alone, or may contain two or more kinds thereof.

In the description herein, the monomer (A) is not included in the monomer (B) and the monomer (C). Therefore, the structural unit (a) derived from the monomer (A) is not included in the structural unit (b) derived from the monomer (B) and the structural unit (c) derived from the monomer (C).

### <Monomer (A1) and Structural Unit (a1)>

In the present embodiment, the monomer (A) preferably contains a monomer (A1) represented by the following general formula (a-1) from the standpoint of further facilitating the exertion of the effects of the present invention. Accordingly, the structural unit (a) preferably contains a structural unit (a1) derived from the monomer (A1).

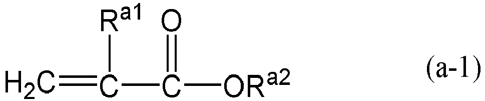

In the general formula (a-1), R^{a1} represents a hydrogen atom or a methyl group. Accordingly, the monomer (A1) has an acryloyl group or a methacryloyl group as a polymerizable functional group.

Monomers having R^{a1} that represents a substituent other than a hydrogen atom and a methyl group are difficult to procure, and the monomers have low reactivity and thus are difficult to polymerize.

R^{a1} preferably represents a hydrogen atom from the standpoint of facilitating the enhancement of the wear resistance. Therefore, the polymerizable functional group of the monomer (A1) is preferably an acryloyl group.

In the general formula (a-1), R^{a2} represents a linear or branched alkyl group having 6 or more and 24 or less carbon atoms.

In both the case where the number of carbon atoms of the alkyl group is less than 6 and the case where the number of carbon atoms of the alkyl group exceeds 24, the oil solubility (i.e., the solubility in a mineral oil) of the copolymer (X) is difficult to secure.

Examples of the linear alkyl group having 6 or more and 24 or less carbon atoms that can be selected as R^{a2} include a n-hexyl group, a n-octyl group, a n-decyl group, a n-dodecyl group, a n-tetradecyl group, a n-hexadecyl group, a n-octadecyl group, a n-icosyl group, a n-docosyl group, and a n-tetracosyl group.

Examples of the branched alkyl group having 6 or more and 24 or less carbon atoms include an isooctyl group, a tert-octyl group, a 2-ethylhexyl group, an isononyl group, an isodecyl group, and an isooctadecyl group.

The number of carbon atoms of the alkyl group is preferably 7 or more, and more preferably 8 or more, from the standpoint of further facilitating the securement of the oil solubility of the poly(meth)acrylate-based copolymer (X). The number of carbon atoms thereof is preferably 22 or less, and more preferably 20 or less.

One kind of the structural unit (a1) derived from the monomer (A1) may be contained alone, or two or more kinds thereof may be contained. In the description herein, the monomer (A1) is not included in the monomer (B) and the monomer (C). Therefore, the structural unit (a1) derived from the monomer (A1) is not included in the structural unit (b) derived from the monomer (B) and the structural unit (c) derived from the monomer (C).

### (Content of Structural Unit (a1))

In the present embodiment, the content of the structural unit (a1) is preferably 50% by mol to 100% by mol, more preferably 60% by mol to 100% by mol, further preferably 70% by mol to 100% by mol, still further preferably 80% by mol to 100% by mol, and still more further preferably 90% by mol to 100% by mol, based on the total structural units of the structural unit (a).

### <Monomer (B) and Structural Unit (b)>

The monomer (B) used in the present embodiment has a (meth)acryloyl group and a polar group.

It is expected that the structural unit (b) derived from the monomer (B) has a function allowing the copolymer (X) to be a multiple point adsorption type copolymer, and contributes to the enhancement of the wear resistance.

One kind of the monomer (B) may be used alone, or two or more kinds thereof may be used in combination. Therefore, the copolymer (X) may contain one kind of the structural unit (b) derived from the monomer (B) alone, or may contain two or more kinds thereof.

In the description herein, the monomer (B) is not included in the monomer (A) and the monomer (C). Therefore, the structural unit (b) derived from the monomer (B) is not included in the structural unit (a) derived from the monomer (A) and the structural unit (c) derived from the monomer (C).

### <Monomer (B 1) and Structural Unit (b 1)>

In the present embodiment, the monomer (B) preferably contains a monomer (B 1) having one or more kind of a group selected from the group consisting of a nitrogen atom-containing group, a hydroxy group, and a carboxy group as the polar group, from the standpoint of further facilitating the exertion of the effects of the present invention (particularly from the standpoint of facilitating the enhancement of the solubility of the copolymer (X) in a mineral oil). Accordingly, the structural unit (b) preferably contains a structural unit (b 1) derived from the monomer (B 1) having a (meth)acryloyl group and the polar group.

### - Monomer having (Meth)acryloyl Group and Nitrogen Atom-containing Group

Examples of the monomer having a (meth)acryloyl group and a nitrogen atom-containing group include an amide group-containing acrylic-based monomer, a primary amino group-containing acrylic-based monomer, a secondary amino group-containing acrylic-based monomer, a tertiary amino group-containing acrylic-based monomer, a nitrile group-containing acrylic-based monomer, a urea group-containing acrylic-based monomer, and a urethane group-containing acrylic-based monomer.

Examples of the amide group-containing acrylic-based monomer include (meth)acrylamide; a monoalkylamino (meth)acrylamide, such as N-methyl (meth)acrylamide, N-ethyl (meth)acrylamide, N-isopropyl (meth)acrylamide, N-n-butyl (meth)acrylamide, and N-isobutyl (meth)acrylamide; a monoalkylaminoalkyl (meth)acrylamide, such as N-methylaminoethyl (meth)acrylamide, N-ethylaminoethyl (meth)acrylamide, N-isopropylamino-n-butyl (meth)acrylamide, N-n-butylamino-n-butyl (meth)acrylamide, and N-isobutylamino-n-butyl (meth)acrylamide; a dialkylamino (meth)acrylamide, such as N,N-dimethyl (meth)acrylamide, N,N-diethyl (meth)acrylamide, N,N-diisopropyl (meth)acrylamide, and N,N-di-n-butyl (meth)acrylamide; and a dialkylaminoalkyl (meth)acrylamide, such as N,N-dimethylaminoethyl (meth)acrylamide, N,N-diethylaminoethyl (meth)acrylamide, N,N-dimethylaminopropyl (meth)acrylamide, and N,N-di-n-butylaminobutyl (meth)acrylamide.

Examples of the primary amino group-containing acrylic-based monomer include an aminoalkyl (meth)acrylate having an alkyl group having 2 to 6 carbon atoms, such as aminoethyl (meth)acrylate.

Example of the secondary amino group-containing acrylic-based monomer include a monoalkylaminoalkyl (meth)acrylate, such as tert-butylaminoethyl (meth)acrylate and methylaminoethyl (meth)acrylate.

Examples of the tertiary amino group-containing acrylic-based monomer include a dialkylaminoalkyl (meth)acrylate, such as dimethylaminoethyl (meth)acrylate and diethylaminoethyl (meth)acrylate.

Examples of the nitrile group-containing acrylic-based monomer include (meth) acrylonitrile.

Examples of the urea group-containing acrylic-based monomer include 2-isocyanatoethyl (meth)acrylate.

Examples of the urethane group-containing acrylic-based monomer include monofunctional urethane acrylate.

### - Monomer having (Meth)acryloyl Group and Hydroxy Group

Examples of the monomer having a (meth)acryloyl group and a hydroxy group include a hydroxy group-containing acrylic-based monomer.

Examples of the hydroxy group-containing acrylic-based monomer include a hydroxyalkyl (meth)acrylate, such as 2-hydroxyethyl (meth)acrylate and 2- or 3-hydroxypropyl (meth)acrylate; and a mono- or di-hydroxyalkyl-substituted (meth)acrylamide, such as N,N-dihydroxymethyl (meth)acrylamide, N,N-dihydroxypropyl (meth)acrylamide, and N,N-di-2-hydroxybutyl (meth)acrylamide.

### - Monomer having (Meth)acryloyl Group and Carboxy Group

Examples of the monomer having a (meth)acryloyl group and a carboxy group include a carboxy group-containing acrylic-based monomer.

Examples of the carboxy group-containing acrylic-based monomer include (meth)acrylic acid; and a carboxyalkyl (meth)acrylate, such as carboxyethyl (meth)acrylate.

### - Preferred Acrylic-based Monomer

Among the acrylic-based monomers described above, one or more kind selected from a dialkylaminoalkyl (meth)acrylamide, a hydroxyalkyl (meth)acrylate, and a carboxyalkyl (meth)acrylate is preferred from the standpoint of further facilitating the exertion of the effects of the present invention.

The number of carbon atoms of the alkyl group of the monomer is preferably 1 to 6, and more preferably 1 to 4.

One kind of the structural unit (b 1) derived from the monomer (B 1) may be contained alone, or two or more kinds thereof may be contained.

In the description herein, the monomer (B 1) is not included in the monomer (A) and the monomer (C). Therefore, the structural unit (b1) derived from the monomer (B1) is not included in the structural unit (a) derived from the monomer (A) and the structural unit (c) derived from the monomer (C).

### (Content of Structural Unit (b1))

In the present embodiment, the content of the structural unit (b1) is preferably 50% by mol to 100% by mol, more preferably 60% by mol to 100% by mol, further preferably 70% by mol to 100% by mol, still further preferably 80% by mol to 100% by mol, and still more further preferably 90% by mol to 100% by mol, based on the total structural units of the structural unit (b).

### (Monomer (B2) and Structural Unit (b2))

In the present embodiment, the content of a structural unit (b2) derived from a monomer (B2) having a polyoxyalkylene group as the polar group is preferably small from the standpoint of enhancing the oil solubility (i.e., the solubility in a mineral oil) of the copolymer (X).

Specifically, the content of the structural unit (b2) derived from the monomer (B2) having a (meth)acryloyl group and a polyoxyalkylene group is preferably less than 5% by mol, more preferably less than 1% by mol, and further preferably less than 0.1% by mol, based on the total structural units of the structural unit (b), and it is most preferred that the structural unit (b2) is not contained.

Examples of the monomer (B2) having a (meth)acryloyl group and a polyoxyalkylene group include polyethylene glycol mono(meth)acrylate, polypropylene glycol mono(meth)acrylate, polyethylene glycol monomethyl ether acrylate, and lauryl alcohol ethylene oxide adduct (meth)arylate.

The polyoxyalkylene group has a number of carbon atoms of the alkylene chain of 2 or more and 4 or less, and has a polymerization degree of 2 or more (for example, 2 to 50).

### <Monomer (C) having Polymerizable Functional Group and Cyclic Structure Group>

The monomer (C) used in the present invention has a polymerizable functional group and a cyclic structure group.

It is estimated that the structural unit (c) derived from the monomer (C) has a function exerting a friction reducing effect in the copolymer (X). Specifically, the copolymer (X) is adsorbed on the surfaces of two members facing each other through the molecular interaction of the cyclic structure group of the structural unit (c), and thereby a suitable repulsive force is generated between the members, so as to exert the friction reducing effect.

One kind of the monomer (C) may be used alone, or two or more kinds thereof may be used in combination. Therefore, the copolymer (X) may contain one kind of the structural unit (c) derived from the monomer (C) alone, or may contain two or more kinds thereof.

In the description herein, the monomer (C) is not included in the monomer (A) and the monomer (B). Therefore, the structural unit (c) derived from the monomer (C) is not included in the structural unit (a) derived from the monomer (A) and the structural unit (b) derived from the monomer (B).

The polymerizable functional group of the monomer (C) is not particularly limited, as far as the copolymer (X) can be formed along with the monomer (A) and the monomer (B), and preferred examples thereof include an acryloyl group, a methacryloyl group, and a vinyl group.

The polymerizable functional group is preferably an acryloyl group or a methacryloyl group, and more preferably an acryloyl group, from the standpoint of further facilitating the enhancement of the wear resistance.

### <Monomer (C1) and Structural Unit (c1)>

In the present embodiment, the monomer (C) preferably contains a monomer (C 1) having one or more kind of a cyclic structure selected from the group consisting of the following items (I) to (III) as the cyclic structure in the cyclic structure group, from the standpoint of further facilitating the exertion of the effects of the present invention.
(I) An aromatic ring having 6 or more and 14 or less ring carbon atoms
(II) An alicyclic ring having 3 or more and 14 or less ring carbon atoms
(III) A heterocyclic ring containing one or more kind of a hetero atom selected from the group consisting of a nitrogen atom and an oxygen atom, having 3 or more and 14 or less ring atoms

Accordingly, the structural unit (c) preferably contains a structural unit (c1) derived from the monomer (C 1) having a polymerizable functional group and one or more kind of a cyclic structure selected from the group consisting of the following items (I) to (III).

### - (I) Aromatic Ring having 6 or more and 14 or less Ring Carbon Atoms

Examples of the aromatic ring having 6 or more and 14 or less ring carbon atoms include benzene, naphthalene, anthracene, and phenanthrene.

The number of ring carbon atoms of the aromatic ring is preferably 6 or more and 10 or less from the standpoint of further facilitating the exertion of the effects of the present invention. Specifically, the aromatic ring is preferably benzene.

### - (II) Alicyclic Ring having 3 or more and 14 or less Ring Carbon Atoms

Examples of the alicyclic ring having 3 or more and 14 or less ring carbon atoms include a monocyclic saturated alicyclic ring, such as cyclopropane, cyclobutane, cyclopentane, cyclohexane, cycloheptane, cyclooctane, cyclodecane, and cyclododecane; a monocyclic unsaturated alicyclic ring, such as cyclopropene, cyclobutene, cyclopentene, cyclohexene, cycloheptene, cyclooctene, cyclodecene, and cyclododecene; a polycyclic saturated alicyclic ring, such as norbornane and adamantane; and a polycyclic saturated alicyclic ring, such as norbornene and adamantene.

The number of ring carbon atoms of the alicyclic ring is preferably 5 or more and 14 or less, and more preferably 5 or more and 10 or less, from the standpoint of further facilitating the exertion of the effects of the present invention.

The alicyclic ring is preferably a monocyclic saturated alicyclic ring or a monocyclic unsaturated alicyclic ring, and more preferably a monocyclic saturated alicyclic ring, from the standpoint of further facilitating the exertion of the effects of the present invention.

Specifically, the alicyclic ring is preferably cyclohexane or cyclohexene, and more preferably cyclohexane.

### - (III) Heterocyclic Ring containing one or more kind of Hetero Atom selected from group consisting of Nitrogen Atom and Oxygen Atom, having 3 or more and 14 or less Ring Atoms

Examples of the heterocyclic ring containing one or more kind of a hetero atom selected from the group consisting of a nitrogen atom and an oxygen atom, having 3 or more and 14 or less ring carbon atoms include a monocyclic heterocyclic ring, for example, a saturated 3-membered heterocyclic ring, such as aziridine, oxirane, diaziridine, oxaziridine, and dioxirane; an unsaturated 3-membered heterocyclic ring, such as azirine, oxirene, and diazirine; a saturated 4-membered heterocyclic ring, such as azetidine, oxetane, diazetidine, and dioxetane; an unsaturated 4-membered heterocyclic ring, such as azete, oxete, diazete, and dioxete; a saturated 5-membered heterocyclic ring, such as pyrrolidine, tetrahydrofuran, imidazolidine, pyrazolidine, oxazolidine, isoxazolidine, and dioxolane; an unsaturated 5-membered heterocyclic ring, such as pyrrole, furan, imidazole, pyrazole, oxazole, isoxazole, triazole, furazane, oxadiazole, dioxazole, tetrazole, oxatetrazole, and pentazole; a saturated 6-membered heterocyclic ring, such as piperidine, tetrahydropyran, piperazine, morpholine, dioxane, hexahydro-1,3,5-triazine, and trioxane; an unsaturated 6-membered heterocyclic ring, such as pyridine, pyran, diazine, oxazine, dioxin, triazine, tetrazine, and pentazine; a saturated 7-membered heterocyclic ring, such as azepane, oxepane, and diazepane; and an unsaturated 7-membered heterocyclic ring, such as azepine, oxepin, and diazepine.

Examples thereof also include a polycyclic heterocyclic ring, for example, 1H-pyrrolidine, indolizine, isoindole, indole, indazole, purine, 4H-quinolizine, isoquinoline, quinoline, phthalazine, naphthyridine, quinoxaline, quinazoline, cinnoline, pteridine, carbazole, β-carboline, phenanthridine, acridine, perimidine, phenanthroline, phenazine, and phenoxazine.

The number of ring atoms of the heterocyclic ring is preferably 5 or more and 14 or less, and more preferably 5 or more and 10 or less, from the standpoint of further facilitating the exertion of the effects of the present invention

### - Substituent

The cyclic structures (I) to (III) each may be unsubstituted or may have a substituent.

The substituent is not particularly limited, as far as the effects of the present invention are exerted, and examples thereof include an organic group having 1 to 30 carbon atoms, and the organic group may have at least one atom of a nitrogen atom and an oxygen atom.

Specific examples thereof include a groups selected from an alkyl group having 1 to 30 (preferably 1 to 16, more preferably 1 to 8, and further preferably 1 to 4) carbon atoms, an alkoxy group having an alkyl group having 1 to 30 (preferably 1 to 16, more preferably 1 to 8, and further preferably 1 to 4) carbon atoms, an amino group, a cyano group, a nitro group, an alkylcarbonyloxy group having an alkyl group having 1 to 30 (preferably 1 to 16, more preferably 1 to 8, and further preferably 1 to 4) carbon atoms, a hydroxy group, an alkyl-substituted carbonyl group, and a carboxy group.

The substituent may further be substituted by the aforementioned arbitrary substituent.

The cyclic structures (I) to (III) are preferably unsubstituted from the standpoint of further facilitating the exertion of the effects of the present invention.

### - Preferred Embodiments of Monomer (C 1)

The monomer (C1) is preferably a monomer represented by the following general formula (c-1) from the standpoint of further facilitating the exertion of the effects of the present invention.

Y-L-Z (c-1)

In the general formula (c-1), Y represents a polymerizable functional group, L represents a direct bond or a linker, and Z represents a cyclic structure group having the cyclic structures (I) to (III).

Examples of the polymerizable functional group that can be selected as Y include an acryloyl group, a methacryloyl group, and a vinyl group. The polymerizable functional group is preferably an acryloyl group from the standpoint of further facilitating the enhancement of the wear resistance.

Examples of the linker that can be selected as L include a divalent aliphatic hydrocarbon group having 1 to 4 carbon atoms, such as a methylene group, an ethylene group, a n-propylene group, and a n-butylene group; a divalent group having a cyclic structure having 6 to 10 carbon atoms, such as a phenylethylene group and a phenylene group; -O-; an oxyalkylene group (having an alkylene group preferably having 1 to 4 carbon atoms); and a polyoxyalkylene group (having an alkylene group preferably having 1 to 4 carbon atoms).

Examples of the cyclic structure group that can be selected as Z include a monovalent cyclic structure group obtained by removing one hydrogen atom from any of the cyclic structures (I) to (III). The cyclic structure group is preferably a monovalent cyclic structure group obtained by removing one hydrogen atom from any of the cyclic structures (I) or (II) from the standpoint of further facilitating the enhancement of the wear resistance.

In the cyclic structure (I), an aromatic ring having 6 or more and 10 or less ring carbon atoms is preferred.

In the cyclic structure (II), a monocyclic saturated alicyclic ring and a monocyclic unsaturated alicyclic ring are preferred, and a monocyclic saturated alicyclic ring is more preferred. The number of ring carbon atoms thereof is preferably 6 or more and 10 or less.

Examples of the compound that is preferred as the monomer (C 1) include benzyl acrylate, cyclohexyl acrylate, and styrene.

One kind of the structural unit (c1) derived from the monomer (C1) may be contained alone, or two or more kinds thereof may be contained.

For example, the structural unit (c1) derived from the monomer (C 1) may contain two or more kinds of structural units derived from two or more kinds of monomers having different cyclic structure groups. Specifically, a structural unit derived from a monomer having the cyclic structure group (I) and a structural unit derived from a monomer having the cyclic structure group (II) may be contained, a structural unit derived from a monomer having the cyclic structure group (I) and a structural unit derived from a monomer having the cyclic structure group (III) may be contained, a structural unit derived from a monomer having the cyclic structure group (II) and a structural unit derived from a monomer having the cyclic structure group (III) may be contained, and a structural unit derived from a monomer having the cyclic structure group (I), a structural unit derived from a monomer having the cyclic structure group (II), and a structural unit derived from a monomer having the cyclic structure group (III) may be contained.

In the description herein, the monomer (C 1) is not included in the monomer (A) and the monomer (B). Therefore, the structural unit (c1) derived from the monomer (C 1) is not included in the structural unit (a) derived from the monomer (A) and the structural unit (b) derived from the monomer (B).

### (Content of Structural Unit (c1))

In the present embodiment, the content of the structural unit (c1) is preferably 50% by mol to 100% by mol, more preferably 60% by mol to 100% by mol, further preferably 70% by mol to 100% by mol, still further preferably 80% by mol to 100% by mol, and still more further preferably 90% by mol to 100% by mol, based on the total structural units of the structural unit (c).

### <Content of Structural Unit (a)>

In the present embodiment, the content of the structural unit (a) derived from the monomer (A) is necessarily 43% by mol or more based on the total structural units of the copolymer (X).

In the case where the content of the structural unit (a) is less than 43% by mol, the solubility of the copolymer (X) in a mineral oil cannot be sufficient in some cases.

The content of the structural unit (a) derived from the monomer (A) is preferably 50% by mol or more, and more preferably 55% by mol or more, based on the total structural units of the copolymer (X), from the standpoint of further facilitating the exertion of the effects of the present invention.

The content of the structural unit (a) derived from the monomer (A) is preferably 84% by mol or less, more preferably 80% by mol or less, and further preferably 76% by mol or less, based on the total structural units of the copolymer (X), from the standpoint further facilitating the exertion of the effects of the present invention by securing the contents of the structural unit (b) derived from the monomer (B) and the structural unit (c) derived from the monomer (C) for balancing among the contents of the structural units. The upper limit values and the lower limit values of these numerical ranges may be optionally combined. Specifically, the content thereof is preferably 50% by mol to 84% by mol, more preferably 50% by mol to 80% by mol, and further preferably 55% by mol to 76% by mol.

In the description herein, the content ratios of the structural units in the copolymer (X) generally agree with the ratios (charge ratios) of the monomers constituting the copolymer (X), respectively.

### <Content of Structural Unit (b)>

In the present embodiment, the content of the structural unit (b) derived from the monomer (B) is preferably 9% by mol or more, more preferably 10% by mol or more, and further preferably 12% by mol or more, based on the total structural units of the copolymer (X), from the standpoint of further facilitating the exertion of the effects of the present invention.

The content of the structural unit (b) derived from the monomer (B) is preferably 50% by mol or less, more preferably 40% by mol or less, further preferably 30% by mol or less, and still further preferably 25% by mol or less, based on the total structural units of the copolymer (X), from the standpoint further facilitating the exertion of the effects of the present invention by securing the contents of the structural unit (a) derived from the monomer (A) and the structural unit (c) derived from the monomer (C) for balancing among the contents of the structural units. The upper limit values and the lower limit values of these numerical ranges may be optionally combined. Specifically, the content thereof is preferably 9% by mol to 50% by mol, more preferably 10% by mol to 40% by mol, and further preferably 12% by mol to 30% by mol.

### <Content of Structural Unit (c)>

In the present embodiment, the content of the structural unit (c) derived from the monomer (C) is preferably 7% by mol or more, more preferably 8% by mol or more, and further preferably 10% by mol or more, based on the total structural units of the copolymer (X), from the standpoint of further facilitating the exertion of the effects of the present invention.

The content of the structural unit (c) derived from the monomer (C) is preferably 30% by mol or less, more preferably 28% by mol or less, further preferably 26% by mol or less, and still further preferably 25% by mol or less, based on the total structural units of the copolymer (X), from the standpoint further facilitating the exertion of the effects of the present invention by securing the contents of the structural unit (a) derived from the monomer (A) and the structural unit (b) derived from the monomer (B) for balancing among the contents of the structural units. The upper limit values and the lower limit values of these numerical ranges may be optionally combined. Specifically, the content thereof is preferably 7% by mol to 30% by mol, more preferably 8% by mol to 28% by mol, further preferably 10% by mol to 26% by mol, and still further preferably 10% by mol to 25% by mol.

### <Content Ratios of Structural Units>

### (Content Ratio of Structural Unit (b) and Structural Unit (a))

In the copolymer (X) of the present embodiment, the content ratio ((b)/(a)) of the structural unit (b) and the structural unit (a) in terms of molar ratio is preferably 0.15 or more, more preferably 0.20 or more, further preferably 0.25 or more, and still further preferably 0.30 or more, from the standpoint of further facilitating the exertion of the effects of the present invention. The content ratio is preferably 0.50 or less, more preferably 0.45 or less, and further preferably 0.40 or less. The upper limit values and the lower limit values of these numerical ranges may be optionally combined. Specifically, the content ratio is preferably 0.15 to 0.50, more preferably 0.20 to 0.45, further preferably 0.25 to 0.40, and still further preferably 0.30 to 0.40.

### (Content Ratio of Structural Unit (c) and Structural Unit (a))

In the copolymer (X) of the present embodiment, the content ratio ((c)/(a)) of the structural unit (c) and the structural unit (a) in terms of molar ratio is preferably 0.10 or more, more preferably 0.20 or more, further preferably 0.30 or more, and still further preferably 0.40 or more, from the standpoint of further facilitating the exertion of the effects of the present invention. The content ratio is preferably 0.48 or less, more preferably 0.46 or less, and further preferably 0.45 or less. The upper limit values and the lower limit values of these numerical ranges may be optionally combined. Specifically, the content ratio is preferably 0.10 to 0.48, more preferably 0.20 to 0.46, further preferably 0.30 to 0.45, and still further preferably 0.40 to 0.45.

### <Additional Monomer>

The copolymer (X) may contain a structural unit derived from an additional monomer in addition to the structural units (a), (b), and (c), in such a range that does not impair the effects of the present invention. Examples of the additional monomer include an additional functional group-containing monomer other than the monomers (A), (B), and (C). Examples of the additional functional group-containing monomer include a functional group-containing (meth)acrylate other than the monomers (A), (B), and (C).

In the copolymer (X), however, the content of the structural unit derived from the additional functional group-containing monomer other than the monomers (A), (B), and (C) is preferably less than 30% by mol, more preferably less than 20% by mol, further preferably less than 10% by mol, still further preferably less than 1% by mol, and still more further preferably less than 0.1% by mol, based on the total structural units, from the standpoint of further facilitating the exertion of the effects of the present invention.

### <Properties and Polymerization Mode of Copolymer (X)>

### (Mass Average Molecular Weight (Mw) and Molecular Weight Distribution (Mw/Mn))

The copolymer (X) of the present embodiment necessarily has a mass average molecular weight (Mw) of 5,000 or more and 90,000 or less.

In the case where the mass average molecular weight (Mw) of the copolymer (X) is less than 5.000, it is difficult to enhance the wear resistance.

In the case where the mass average molecular weight (Mw) of the copolymer (X) exceeds 90.000, the solubility in a mineral oil may be deteriorated in some cases. Furthermore, the intervention of the copolymer (X) to the gap between two members becomes difficult to make it difficult to exert the effect of enhancing the wear resistance.

The mass average molecular weight (Mw) thereof is preferably 5,500 or more, more preferably 6,000 or more, and further preferably 7,000 or more, from the standpoint of further facilitating the exertion of the effects of the present invention and the standpoint of further facilitating the enhancement of the solubility in a lubricant base oil. The mass average molecular weight (Mw) thereof is preferably 80,000 or less, more preferably 60,000 or less, and further preferably 50,000 or less.

The upper limit values and the lower limit values of these numerical ranges may be optionally combined. Specifically, the mass average molecular weight (Mw) thereof is preferably 5,500 to 80,000, more preferably 6,000 to 60,000, and further preferably 7,000 to 50,000.

The molecular weight distribution (Mw/Mn) of the copolymer (X) of the present embodiment is preferably 3.5 or less, more preferably 3.0 or less, and further preferably 2.8 or less, from the standpoint of further facilitating the exertion of the friction reducing effect. The molecular weight distribution (Mw/Mn) of the copolymer (X) of the present embodiment may be 1.01 or more, may be 1.3 or more, and may be 1.5 or more.

The mass average molecular weight (Mw) and the molecular weight distribution (Mw/Mn) are values that are measured or calculated according to the method shown in the examples described later.

### (Polymerization Mode)

The polymerization mode of the copolymer (X) of the present embodiment is not particularly limited, and may be either block copolymerization, random copolymerization, or block-random copolymerization.

### [Method for producing Lubricating Oil Additive Composition]

The method for producing a lubricating oil additive composition of the present embodiment includes a step (S) of producing a copolymer (X) through polymerization of the following monomers (A) to (C).
- A monomer (A): a monomer having a (meth)acryloyl group and a linear or branched alkyl group having 6 or more and 24 or less carbon atoms
- A monomer (B): a monomer having a (meth)acryloyl group and a polar group
- A monomer (C): a monomer having a polymerizable functional group and a cyclic structure group

The step (S) of producing a copolymer (X) will be described in detail below.

### <Step (S) of producing Copolymer (X)>

The production method (polymerization method) of the copolymer (X) is not particularly limited, and any of the known methods may be used for the production. Examples of the method include an emulsion polymerization method, a suspension polymerization method, and a solution polymerization method.

The production method (polymerization method) of the copolymer (X) employed is preferably a solution polymerization method using a solvent that is used for dissolution in a lubricant base oil from the standpoint of the application of the copolymer (X) in the present invention, i.e., the application as a lubricating oil additive composition.

### (Solution Polymerization Method)

The solution polymerization method is performed in such a manner that the monomers (A), (B), and (C), a solvent, and an initiator are charged in a reactor, and after purging the interior of the reactor with nitrogen, are reacted at 60°C to 100°C for 2 hours to 10 hours under agitation. The additional monomer other than the monomers (A), (B), and (C) may be optionally charged in the reactor.

The solvent used in the solution polymerization method is not particularly limited, and for example, an ester compound, such as a polyol ester, a dibasic acid ester, a hindered ester, and a monoester, is preferably used.

One kind of the compound may be used alone, or two or more kinds thereof may be used in combination.

Examples of the initiator used in the solution polymerization method include an azo-based initiator, such as 2,2'-azobis(isobutyronitrile), 2,2'-azobis(2-amidinopropane) dihydrochloride, 2,2'-azobis(N,N-dimethyleneisobutylamidine) dihydrochloride, 1,1'-azobis(cyclohexyl-1-carbonitrile), and 2,2'-azobis(2,4-dimethylvaleronitrile); hydrogen peroxide; an organic peroxide compound, such as benzoyl peroxide, t-butyl hydroperoxide, cumene hydroperoxide, methyl ethyl ketone peroxide, and perbenzoic acid; a persulfate, such as sodium persulfate, potassium persulfate, and ammonium persulfate; a redox initiator, such as hydrogen peroxide-Fe²⁺; and the known radical initiators.

Examples of a chain transfer agent used in the solution polymerization method include a secondary alcohol compound, such as a mercaptan compound, a thiocarboxylic acid compound, and isopropanol; an amine compound, such as dibutylamine; a hypophosphite compound, such as sodium hypophosphite; a chlorine-containing compound; and an alkylbenzene compound.

The molecular weight of the copolymer (X) may be regulated by a known method. For example, the molecular weight of the copolymer (X) can be regulated by the reaction temperature, the reaction time, the amount of the initiator, the amounts of the monomers charged, the kind of the solvent, the use of the chain transfer agent, and the like.

### (Amount of Monomer (A) charged)

In the production method of the present embodiment, the amount of the monomer (A) charged is preferably 57% by mass or more, more preferably 65% by mass or more, and further preferably 70% by mass or more, based on the total monomers charged, from the standpoint of facilitating the regulation to the content of the structural unit (a). The amount thereof is preferably 90% by mass or less, more preferably 87% by mass or less, and further preferably 85% by mass or less.

The upper limit values and the lower limit values of these numerical ranges may be optionally combined. Specifically, the amount thereof is preferably 57% by mass to 90% by mass, more preferably 65% by mass to 87% by mass, and further preferably 70% by mass to 85% by mass.

The preferred compounds as the monomer (A) have been described above.

### (Amount of Monomer (B) charged)

In the production method of the present embodiment, the amount of the monomer (B) charged is preferably 5%% by mass or more, more preferably 6% by mass or more, and further preferably 7% by mass or more, based on the total monomers charged, from the standpoint of facilitating the regulation to the content of the structural unit (b).

The amount thereof is preferably 38% by mass or less, more preferably 30% by mass or less, further preferably 20% by mass or less, and still further preferably 15% by mass or less. The upper limit values and the lower limit values of these numerical ranges may be optionally combined. Specifically, the amount thereof is preferably 5%% by mass to 38% by mass, more preferably 6% by mass to 20% by mass, and further preferably 7% by mass to 15% by mass.

The preferred compounds as the monomer (B) have been described above.

### (Amount of Monomer (C) charged)

In the production method of the present embodiment, the amount of the monomer (C) charged is preferably 5%% by mass or more, more preferably 6% by mass or more, and further preferably 7% by mass or more, based on the total monomers charged, from the standpoint of facilitating the regulation to the content of the structural unit (c).

The amount thereof is preferably 27% by mass or less, more preferably 23% by mass or less, and further preferably 20% by mass or less. The upper limit values and the lower limit values of these numerical ranges may be optionally combined. Specifically, the amount thereof is preferably 5%% by mass to 27% by mass, more preferably 6% by mass to 23% by mass, and further preferably 7% by mass to 20% by mass.

The preferred compounds as the monomer (C) have been described above.

### <Content of Copolymer (X) in Lubricating Oil Additive Composition>

In the lubricating oil additive composition of the present embodiment, the content of the copolymer (X) is preferably 50% by mass or more, more preferably 60% by mass or more, further preferably 70% by mass or more, still further preferably 80% by mass or more, still more further preferably 90% by mass or more, and still more further preferably 95% by mass or more, based on the total amount of the lubricating oil additive composition, from the standpoint of further facilitating the exertion of the effects of the present invention in adding to a lubricant base oil. The content of the copolymer (X) is generally less than 99% by mass based on the total amount of the lubricating oil additive composition, in consideration of the purity of the copolymer (X).

The lubricating oil additive composition of the present embodiment may be diluted with a diluent solvent from the standpoint of the handleability. The content of the copolymer (X) in the lubricating oil additive composition means the content based on the total amount of the effective components of the lubricating oil additive composition excluding the diluent solvent.

The diluent solvent used is preferably the same one as the polymerization solvent described above.

### <Applications of Lubricating Oil Additive Composition>

The lubricating oil additive composition of the present embodiment is excellent in solubility in a lubricant base oil and is excellent in wear resistance. Therefore, the lubricating oil additive composition is useful as a friction modifier.

Accordingly, the present embodiment provides a use method including using the lubricating oil additive composition as a friction modifier.

### [Lubricating Oil Composition]

The lubricating oil composition of the present embodiment contains the lubricating oil additive composition containing the copolymer (X), and a lubricant base oil.

The content of the lubricating oil additive composition is such an amount that regulates the content of the copolymer (X) to preferably 0.1% by mass or more, more preferably 0.2% by mass or more, and further preferably 0.3% by mass or more, based on the total amount of the lubricating oil composition, from the standpoint of favorably exerting the effect of addition of the lubricating oil additive composition. The content thereof is such an amount that regulates the content of the copolymer (X) to preferably 10% by mass or less, more preferably 5% by mass or less, and further preferably 3% by mass or less, based on the total amount of the lubricating oil composition.

The upper limit values and the lower limit values of these numerical ranges may be optionally combined. Specifically, the content of the copolymer (X) is regulated to preferably 0.1% by mass to 10% by mass, more preferably 0.2% by mass to 5% by mass, and further preferably 0.3% by mass to 3% by mass.

### <Lubricant Base Oil>

The lubricant base oil used may be an ordinary base oil having been used in lubricating oil compositions with no particular limitation. Specific examples thereof include one or more kind selected from the group consisting of a mineral oil and a synthetic oil.

The kinematic viscosity at 100°C of the lubricant base oil is preferably in a range of 1 mm²/s to 50 mm²/s, more preferably in a range of 2 mm²/s to 30 mm²/s, and further preferably in a range of 3 mm²/s to 20 mm²/s. The viscosity index of the lubricant base oil is preferably 80 or more, more preferably 90 or more, and further preferably 100 or more.

The kinematic viscosity and the viscosity index of the lubricant base oil are values that are measured or calculated according to JIS K2283:2000.

Specific examples of the lubricant base oil will be shown below.

Examples of the mineral oil include a distillate oil obtained by subjecting a paraffin base crude oil, an intermediate base crude oil, or a naphthene base crude oil to atmospheric distillation and/or distillation under reduced pressure; and a refined oil obtained by refining the distillate oil by an ordinary method. Examples of the refining method for obtaining a refined oil include a solvent dewaxing treatment, a hydrogenation isomerization treatment, a hydrogenation finishing treatment, and a white clay treatment.

Examples of the synthetic oil include a hydrocarbon-based oil, an aromatic-based oil, an ester-based oil, and an ether-based oil. The synthetic oil used may be GTL (gas-to-liquid) obtained by isomerizing wax produced from natural gas by the Fischer-Tropsch method (GTL wax, gas-to-liquid wax).

### <Additional Additive>

The lubricating oil composition of the present embodiment may contain an additional additive, such as an antioxidant, an oiliness agent, a detergent dispersant, a viscosity index improver, a rust inhibitor, a metal deactivator, and an anti-foaming agent, in such a range that does not impair the effects of the lubricating oil additive composition. One kind thereof may be used alone, and two or more kinds thereof may be used in combination.

The present embodiment also provides an additive package for a lubricating oil composition, containing the lubricating oil additive composition containing the copolymer (X), and also containing one or more kind of an additive selected from an antioxidant, an oiliness agent, a detergent dispersant, a viscosity index improver, a rust inhibitor, a metal deactivator, an anti-foaming agent, and the like, as an additional additive other than the lubricating oil additive composition containing the copolymer (X).

### (Antioxidant)

The antioxidant used may be an amine-based antioxidant, a phenol-based antioxidant, and the like having been used in the ordinary lubricating oil composition. One kind of the antioxidant may be used alone, and two or more kinds thereof may be used in combination.

Examples of the amine-based antioxidant include a monoalkyldiphenylamine-based compound, such as monooctyldiphenylamine and monononyldiphenylamine; a dialkyldiphenylamine-based compound, such as 4,4'-dibutyldiphenylamine, 4,4'-dipentyldiphenylamine, 4,4'-dihexyldiphenylamine, 4,4'-diheptyldiphenylamine, 4,4'-dioctyldiphenylamine, and 4,4'-dinonyldiphenylamine; a polyalkyldiphenylamine-based compound, such as tetrabutyldiphenylamine, tetrahexyldiphenylamine, tetraoctyldiphenylamine, and tetranonyldiphenylamine; and a naphthylamine-based compound, such as α-naphthylamine, phenyl-α-naphthylamine, butylphenyl-α-naphthylamine, pentylphenyl-α-naphthylamine, hexylphenyl-α-naphthylamine, heptylphenyl-α-naphthylamine, octylphenyl-α-naphthylamine, and nonylphenyl-α-naphthylamine.

Examples of the phenol-based antioxidant include a monophenol-based compound, such as 2,6-di-tert-butyl-4-methylphenol and 2,6-di-tert-butyl-4-ethylphenol; and a bisphenol-based compound, such as 4,4'-methylenebis(2,6-di-tert-butylphenol) and 2,2'-methylenebis(4-ethyl-6-tert-butylphenol).

The content of the antioxidant added may be a minimum amount that is required for retaining the oxidation stability of the lubricating oil composition. Specifically, the content thereof is preferably 0.01 to 1% by mass based on the total amount of the lubricating oil composition.

### (Oiliness Agent)

Examples of the oiliness agent include an aliphatic alcohol; a fatty acid compound, such as a fatty acid and a fatty acid metal salt; an ester compound, such as a polyol ester, a sorbitan ester, and a glyceride; and an amine compound, such as an aliphatic amine.

The content of the oiliness agent is generally 0.1 to 20% by mass, and preferably 0.5 to 10% by mass, based on the total amount of the lubricating oil composition, from the standpoint of the effect of the addition thereof.

### (Detergent Dispersant)

Examples of the detergent dispersant include a metal sulfonate, a metal salicylate, a metal phenate, and a succinimide.

The content of the detergent dispersant is generally 0.01 to 10% by mass, and preferably 0.1 to 5% by mass, based on the total amount of the lubricating oil composition, from the standpoint of the effect of the addition thereof.

### (Viscosity Index Improver)

Examples of the viscosity index improver include a polymethacrylate, a dispersed polymethacrylate, an olefin-based copolymer (such as an ethylenepropylene copolymer), a dispersed olefin-based copolymer, and a styrene-based copolymer (such as a styrene-diene hydrogenated copolymer).

The content of the viscosity index improver is preferably 0.3 to 5% by mass based on the total amount of the lubricating oil composition.

### (Rust Inhibitor)

Examples of the rust inhibitor include a metal-based sulfonate, a succinate ester, an alkylamine, and an alkanolamine, such as monoisopropanolamine.

The content of the rust inhibitor is generally 0.01 to 5% by mass, and preferably 0.03 to 3% by mass, based on the total amount of the lubricating oil composition, from the standpoint of the effect of the addition thereof.

### (Metal Deactivator)

Examples of the metal deactivator include benzotriazole and thiadiazole.

The content of the metal deactivator is generally 0.01 to 5% by mass, and preferably 0.01 to 1% by mass, based on the total amount of the lubricating oil composition, from the standpoint of the effect of the addition thereof.

### (Anti-foaming Agent)

Examples of the anti-foaming agent include a methylsilicone oil, a fluorosilicone oil, and a polyacrylate.

The content of the anti-foaming agent is generally 0.0005 to 0.01% by mass based on the total amount of the lubricating oil composition from the standpoint of the effect of the addition thereof.

### <Grease Composition>

The lubricating oil additive composition of the present embodiment can be used by blending in a grease composition.

Accordingly, the present embodiment can also provide a grease composition containing the lubricating oil additive composition, a thickening agent, and a lubricant base oil.

### <Properties of Lubricating Oil Composition>

### (Kinematic Viscosity and Viscosity Index)

The kinematic viscosity at 100°C of the lubricating oil composition of the present embodiment is preferably 1.0 mm²/s to 50 mm²/s, more preferably 2.0 mm²/s to 30 mm²/s, and further preferably 3.0 mm²/s to 20 mm²/s.

The viscosity index of the lubricating oil composition of the present embodiment is preferably 90 or more, more preferably 100 or more, and further preferably 110 or more.

The kinematic viscosity and the viscosity index of the lubricating oil composition are values that are measured or calculated according to JIS K2283:2000.

### (Wear Resistance)

The lubricating oil composition of the present embodiment preferably has a wear track diameter by the ball on disk test shown in the examples described later of less than 520 pm, more preferably less than 500 pm, further preferably 480 pm or less, still further preferably 460 pm or less, and still more further preferably 440 pm or less.

### [Application of Lubricating Oil Composition]

The lubricating oil composition of the present embodiment is excellent in wear resistance due to the copolymer (X) contained therein.

Accordingly, the lubricating oil composition of the present embodiment can be favorably used, for example, in various applications including a drive train oil, such as a gear oil (such as a manual transmission fluid and a differential fluid), an automatic transmission fluid, a variable transmission fluid (such as a belt CVT fluid and a toroidal CVT fluid), a power steering fluid, a shock absorber fluid, and an electric motor oil; an engine oil for an internal combustion engine, such as a gasoline engine, a diesel engine, and a gas engine; a hydraulic fluid; a turbine oil; a compressor oil; a fluid dynamic bearing oil; a roller bearing oil; and a refrigerator oil, and can be charged in equipments used in these applications and used favorably as a lubricating oil composition that lubricates components of the equipments.

### [Lubricating Method using Lubricating Oil Composition]

Preferred examples of a lubricating method using the lubricating oil composition of the present embodiment include a method of charging the lubricating oil composition in equipments used in the aforementioned applications, and lubricating the components of the equipments.

### [One Embodiment provided by Present Invention]

According to one embodiment of the present invention, the following items [1] to [12] are provided.
[1] A lubricating oil additive composition containing a copolymer (X) containing the following structural units (a) to (c):
   - a structural unit (a): a structural unit derived from a monomer (A) having a (meth)acryloyl group and a linear or branched alkyl group having 6 or more and 24 or less carbon atoms,
   - a structural unit (b): a structural unit derived from a monomer (B) having a (meth)acryloyl group and a polar group, and
   - a structural unit (c): a structural unit derived from a monomer (C) having a polymerizable functional group and a cyclic structure group,
      the copolymer (X) having
      a content of the structural unit (a) of 43% by mol or more based on the total structural units of the copolymer (X), and
      a mass average molecular weight (Mw) of 5,000 or more and 90,000 or less.
[2] The lubricating oil additive composition according to the item [1], wherein the structural unit (a) contains a structural unit (a1) derived from a monomer (A1) represented by the following general formula (a-1): 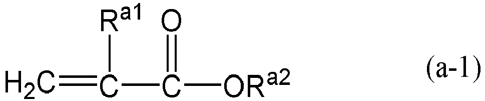 wherein in the general formula (a-1), R^{a1} represents a hydrogen atom or a methyl group, and R^{a2} represents a linear or branched alkyl group having 6 or more and 24 or less carbon atoms.
[3] The lubricating oil additive composition according to the item [1] or [2], wherein the structural unit (b) contains a structural unit (b1) derived from a monomer (B1) having one or more kind of a group selected from the group consisting of a nitrogen atom-containing group, a hydroxy group, and a carboxy group as the polar group.
[4] The lubricating oil additive composition according to any one of the items [1] to [3], wherein the structural unit (b) has a content of a structural unit (b2) derived from a monomer (B2) having a polyoxyalkylene group as the polar group of less than 5% by mol based on the total structural units of the structural unit (b).
[5] The lubricating oil additive composition according to any one of the items [1] to [4], wherein the polymerizable functional group of the monomer (C) is a (meth)acryloyl group or a vinyl group.
[6] The lubricating oil additive composition according to any one of the items [1] to [5], wherein the structural unit (c) contains a structural unit (c1) derived from a monomer (C 1) having one or more kind of a cyclic structure selected from the group consisting of the following items (I) to (III) as a cyclic structure in the cyclic structure group:
   (I) an aromatic ring having 6 or more and 14 or less ring carbon atoms,
   (II) an alicyclic ring having 3 or more and 14 or less ring carbon atoms, and
   (III) a heterocyclic ring containing one or more kind of a hetero atom selected from the group consisting of a nitrogen atom and an oxygen atom, having 3 or more and 14 or less ring atoms.
[7] The lubricating oil additive composition according to any one of the items [1] to [6], wherein the copolymer (X) has a content of the structural unit (b) derived from the monomer (B) of 9% by mol or more based on the total structural units of the copolymer (X).
[8] The lubricating oil additive composition according to any one of the items [1] to [7], wherein the copolymer (X) has a content of the structural unit (c) derived from the monomer (C) of 7% by mol or more and 30% by mol or less based on the total structural units of the copolymer (X).
[9] The lubricating oil additive composition according to any one of the items [1] to [8], wherein the lubricating oil additive composition is used as a friction modifier.
[10] A use method including using the lubricating oil additive composition according to any one of the items [1] to [8] as a friction modifier.
[11] A lubricating oil composition containing the lubricating oil additive composition according to any one of the items [1] to [9] and a lubricant base oil.
[12] A method for producing the lubricating oil additive composition according to the item [1], including
   a step (S) of producing a copolymer (X) through polymerization of the following monomers (A) to (C):
   - a monomer (A): a monomer having a (meth)acryloyl group and a linear or branched alkyl group having 6 or more and 24 or less carbon atoms,
   - a monomer (B): a monomer having a (meth)acryloyl group and a polar group, and
   - a monomer (C): a monomer having a polymerizable functional group and a cyclic structure group.

### Examples

The present invention will be described more specifically with reference to examples below, but the present invention is not limited to the following examples.

### [Measurement Methods of Property Values]

The properties of the raw materials used in Examples and Comparative Examples and the lubricating oil compositions of Examples and Comparative Examples were measured according to the following procedures.

### (1) Kinematic Viscosity and Viscosity Index

The kinematic viscosity at 100°C and the viscosity index of the base oil and the lubricating oil composition were measured or calculated according to JIS K2283:2000.

### (2) Mass Average Molecular Weight (Mw) and Molecular Weight Distribution (Mw/Mn)

One column of "TSKguardcolumn Super HZ-L" and two columns of "TSKSuperMultipore HZ-M", all produced by Tosoh Corporation, were mounted on "1515 Isocratic HPLC Pump" and "2414 Differential Refractive Index (RI) Detector", both produced by Waters Corporation, in this order from the upstream side, and the molecular weight was measured under conditions of a measurement temperature of 40°C, tetrahydrofuran as the mobile phase, a flow rate of 0.35 mL/min, and a sample concentration of 1.0 mg/mL, and obtained as a standard polystyrene conversion value.

### [Production Examples 1 to 11 and Comparative Production Examples 1 to 5]

Copolymers were produced in Production Examples 1 to 11 and Comparative Production Examples 1 to 5 shown below.

### <Monomers used>

### (Monomer (A))

- Dodecyl acrylate: a compound represented by the general formula (a-1), wherein R^{a1} represents a hydrogen atom, and R^{a2} represents a n-dodecyl group (i.e., a linear alkyl group having 12 carbon atoms)
- Dodecyl methacrylate: a compound represented by the general formula (a-1), wherein R^{a1} represents a methyl group, and R^{a2} represents a n-dodecyl group (i.e., a linear alkyl group having 12 carbon atoms)
- 2-Ethylhexyl acrylate: a compound represented by the general formula (a-1), wherein R^{a1} represents a hydrogen atom, and R^{a2} represents a 2-ethylhexyl group (i.e., a branched alkyl group having 8 carbon atoms)
- Stearyl acrylate: a compound represented by the general formula (a-1), wherein R^{a1} represents a hydrogen atom, and R^{a2} represents a stearyl group (i.e., a linear alkyl group having 18 carbon atoms)

### (Monomer (B))

- 2-Hydroxyethyl acrylate: a monomer having an acryloyl group and a hydroxy group as the polar group

The structural formula thereof is shown below. 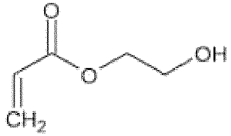
- 2-Hydroxyethyl methacrylate: a monomer having a methacryloyl group and a hydroxy group as the polar group

The structural formula thereof is shown below. 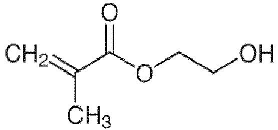
- Carboxyethyl acrylate: a monomer having an acryloyl group and a carboxy group as the polar group

The structural formula thereof is shown below. 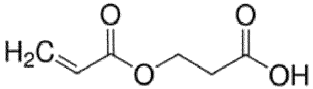
- N-(3-(Dimethylamino)propyl) acrylamide (alias: N,N-dimethylaminopropyl (meth)acrylamide)): a monomer having an acryloyl group and a nitrogen atom-containing group as the polar group

The structural formula thereof is shown below.

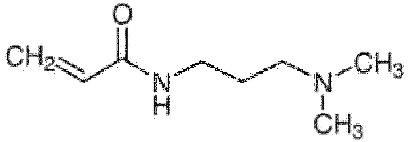

### (Monomer (C))

- Benzyl acrylate: a monomer having an acryloyl group as the polymerizable functional group and benzene as the cyclic structure

Specifically, a monomer represented by the general formula (c-1), wherein Y represents an acryloyl group, L represents an oxymethylene group, and Z represents a phenylene group
- Benzyl methacrylate: a monomer having a methacryloyl group as the polymerizable functional group and benzene as the cyclic structure

Specifically, a monomer represented by the general formula (c-1), wherein Y represents a methacryloyl group, L represents an oxymethylene group, and Z represents a phenylene group
- Cyclohexyl acrylate: a monomer having an acryloyl group as the polymerizable functional group and cyclohexane as the cyclic structure

Specifically, a monomer represented by the general formula (c-1), wherein Y represents an acryloyl group, L represents -O-, and Z represents a cyclohexyl group
- Furfuryl acrylate: a monomer having an acryloyl group as the polymerizable functional group and furan as the cyclic structure

Specifically, a monomer represented by the general formula (c-1), wherein Y represents an acryloyl group, L represents an oxymethylene group, and Z represents a furyl group
- Tetrahydrofurfuryl acrylate: a monomer having an acryloyl group as the polymerizable functional group and tetrahydrofuran as the cyclic structure

Specifically, a monomer represented by the general formula (c-1), wherein Y represents an acryloyl group, L represents an oxymethylene group, and Z represents a tetrahydrofuryl group

### <Production Example 1: Production of Copolymer (X)-1>

In a reaction vessel equipped with an agitator, a heating and cooling device, a thermometer, a dropping funnel, and a nitrogen blowing tube, 20 g (83 mmol) of dodecyl acrylate as the monomer (A), 3 g (26 mmol) of 2-hydroxyethyl acrylate as the monomer (B), 5 g (31 mmol) of benzyl acrylate as the monomer (C), and 28 g of bis(2-ethylhexyl) sebacate as a solvent were charged.

Subsequently, after purging the interior of the reaction vessel with nitrogen, 0.1 g (0.4 mmol) of 2,2'-azobis(2,4-dimethylvaleronitrile) as an initiator and 0.08 g (0.4 mmol) of dodecylmercaptan were added thereto, and then the temperature was gradually increased under agitation, so as to perform the reaction at a temperature of 75 to 85°C for 6 hours. After completing the reaction, the unreacted monomers were distilled off under reduced pressure to provide a copolymer (X)-1.

### <Production Example 2: Production of Copolymer (X)-2>

In a reaction vessel equipped with an agitator, a heating and cooling device, a thermometer, a dropping funnel, and a nitrogen blowing tube, 20 g (83 mmol) of dodecyl acrylate as the monomer (A) and 28 g of bis(2-ethylhexyl) sebacate as a solvent were charged.

Subsequently, after purging the interior of the reaction vessel with nitrogen, 0.1 g (0.4 mmol) of 2,2'-azobis(2,4-dimethylvaleronitrile) and 0.13 g (0.4 mmol) of cyanomethyl dodecyl trithiocarbonate as initiators were added thereto, and then the temperature was gradually increased under agitation, so as to perform the reaction at a temperature of 75 to 85°C for 6 hours. After confirming that dodecyl acrylate was converted to a polymer at a rate of 96% or more, 5 g (31 mmol) of benzyl acrylate as the monomer (C) and 0.05 g (0.2 mmol) of 2,2'-azobis(2,4-dimethylvaleronitrile) were added thereto, and the reaction was further performed at a temperature of 75 to 85°C for 6 hours. After confirming that benzyl acrylate was converted to a polymer at a rate of 96% or more, 3 g (26 mmol) of 2-hydroxyethyl acrylate as the monomer (B) and 0.05 g (0.2 mmol) of 2,2'-azobis(2,4-dimethylvaleronitrile) were added thereto, and the reaction was further performed at a temperature of 75 to 85°C for 6 hours. After completing the reaction, the unreacted monomers were distilled off under reduced pressure to provide a copolymer (X)-2.

### <Production Example 3: Production of Copolymer (X)-3>

A copolymer (X)-3 was produced in the same manner as in Production Example 1 except that the monomer (B) was changed to carboxyethyl acrylate, and the amounts of the monomers (A) to (C) added were regulated to provide the mass ratios and the molar ratios shown in Table 1.

### <Production Example 4: Production of Copolymer (X)-4>

A copolymer (X)-4 was produced in the same manner as in Production Example 1 except that the monomer (B) was changed to N-(3-(dimethylamino)propyl) acrylamide, and the amounts of the monomers (A) to (C) added were regulated to provide the mass ratios and the molar ratios shown in Table 1.

### <Production Example 5: Production of Copolymer (X)-5>

A copolymer (X)-5 was produced in the same manner as in Production Example 1 except that dodecyl acrylate and 2-ethylhexyl acrylate were used in combination as the monomer (A), and the amounts of the monomers (A) to (C) added were regulated to provide the mass ratios and the molar ratios shown in Table 1.

### <Production Example 6: Production of Copolymer (X)-6>

A copolymer (X)-6 was produced in the same manner as in Production Example 1 except that dodecyl acrylate and stearyl acrylate were used in combination as the monomer (A), and the amounts of the monomers (A) to (C) added were regulated to provide the mass ratios and the molar ratios shown in Table 1.

### <Production Example 7: Production of Copolymer (X)-7>

A copolymer (X)-7 was produced in the same manner as in Production Example 1 except that the amounts of the monomers (A) to (C) added were regulated to provide the mass ratios and the molar ratios shown in Table 1.

### <Production Example 8: Production of Copolymer (X)-8>

A copolymer (X)-8 was produced in the same manner as in Production Example 1 except that the monomer (C) was changed to cyclohexyl acrylate, and the amounts of the monomers (A) to (C) added were regulated to provide the mass ratios and the molar ratios shown in Table 1.

### <Production Example 9: Production of Copolymer (X)-9>

A copolymer (X)-9 was produced in the same manner as in Production Example 1 except that the monomer (A) was changed to dodecyl methacrylate, the monomer (B) was changed to 2-hydroxyethyl methacrylate, the monomer (C) was changed to benzyl methacrylate, and the amounts of the monomers (A) to (C) added were regulated to provide the mass ratios and the molar ratios shown in Table 1.

### <Production Example 10: Production of Copolymer (X)-10>

A copolymer (X)-10 was produced in the same manner as in Production Example 1 except that furfuryl acrylate was added along with benzyl acrylate as the monomer (C), and the amounts of the monomers (A) to (C) added were regulated to provide the mass ratios and the molar ratios shown in Table 1.

### <Production Example 11: Production of Copolymer (X)-11>

A copolymer (X)-11 was produced in the same manner as in Production Example 1 except that tetrahydrofurfuryl acrylate was added along with benzyl acrylate as the monomer (C), and the amounts of the monomers (A) to (C) added were regulated to provide the mass ratios and the molar ratios shown in Table 1.

### <Comparative Production Example 1: Production of Copolymer (X')-1>

A copolymer (X')-1 was produced in the same manner as in Production Example 1 except that the monomer (C) was not added, the monomer (B) was changed to N-(3-(dimethylamino)propyl) acrylamide, and the amounts of the monomers (A) and (B) added were regulated to provide the mass ratios and the molar ratios shown in Table 2.

### <Comparative Production Example 2: Production of Copolymer (X')-2>

A copolymer (X')-2 was produced in the same manner as in Production Example 1 except that the monomer (C) and the monomer (B) were not added.

While the synthesized material obtained in Comparative Production Example 2 is a polymer but not a copolymer in a strict meaning, the polymer may be collectively referred to as a copolymer in the description below for the sake of convenience.

### <Comparative Production Example 3: Production of Copolymer (X')-3>

A copolymer (X')-3 was produced in the same manner as in Production Example 1 except that the monomer (B) was not added, and the amounts of the monomers (A) and (C) added were regulated to provide the mass ratios and the molar ratios shown in Table 2.

### <Comparative Production Example 4: Production of Copolymer (X')-4>

A copolymer (X')-4 was produced in the same manner as in Production Example 1 except that the monomer (C) was not added, and the amounts of the monomers (A) and (B) added were regulated to provide the mass ratios and the molar ratios shown in Table 2.

### <Comparative Production Example 5: Production of Copolymer (X')-5>

A copolymer (X')-5 was produced in the same manner as in Production Example 1 except that the amounts of the monomers (A) to (C) added were regulated to provide the mass ratios and the molar ratios shown in Table 2.

### [Examples 1 to 11 and Comparative Examples 1 to 5]

A lubricant base oil and the copolymers produced in Production Examples 1 to 11 and Comparative Production Examples 1 to 5 were sufficiently mixed to prepare lubricating oil compositions of Examples 1 to 11 and Comparative Examples 1 to 5, respectively.

The lubricant base oil was a mineral oil (100°C kinematic viscosity: 5.3 mm²/s, viscosity index: 104, API Classification: Group II).

The content of the lubricant base oil in the lubricating oil composition was 99% by mass based on the total amount of the lubricating oil composition.

The copolymers produced in Production Examples 1 to 11 and Comparative Production Examples 1 to 5 each were blended in the lubricant base oil in a state that the copolymer was dissolved in bis(2-ethylhexyl) sebacate as the polymerization solvent (which may be hereinafter referred to as a "solvent"). The mixing ratio of the copolymer and bis(2-ethylhexyl) sebacate was 1/1 (mass ratio).

The content of the copolymer (including the solvent) in the lubricating oil composition was 1% by mass based on the total amount of the lubricating oil composition. Therefore, the content of the copolymer (i.e., the content of the copolymer excluding the solvent) in the lubricating oil composition was 0.5% by mass based on the total amount of the lubricating oil composition.

### [Evaluation Methods]

The following tests were performed for evaluating the solubility in a mineral oil and the wear resistance.

### <Evaluation of Solubility in Lubricant Base Oil (Mineral Oil)>

The copolymers (copolymers excluding the solvent) produced in Production Examples 1 to 11 and Comparative Production Examples 1 to 5 each were added to the aforementioned mineral oil (100°C kinematic viscosity: 5.3 mm²/s, viscosity index: 104, API Classification: Group II) in an amount of 1% by mass. Subsequently, the mineral oil was heated to 80°C, agitated for 30 minutes, and then allowed to stand until reaching room temperature (25°C). The state of the oil at the time reaching room temperature was visually evaluated. The evaluation standard was as follows.
Evaluation A: transparent
Evaluation B: precipitation and white turbidity found

### <Evaluation of Wear Resistance (Ball on Disk Test)>

With a high speed frequency friction machine TE 77 (produced by Phoenix Tribology, Ltd.), the lubricating oil composition was introduced between the test plate and the test ball, the test ball was moved under the following condition, and after the test, the wear track diameter with the test ball was measured.
Test plate: material: SUJ2, shape: 58 mm in length × 38 mm in width × 3.9 mm in thickness
Test ball: material: SUJ2, diameter: 10 mm
Oil supply condition: oil bath, oil amount: 3 mL
Load: 50 N (5 min) => 100 N (5 min) => 150 N (5 min) => 200 N (5 min)
Temperature: 100°C
Amplitude: 10 mm
Frequency: 10 Hz

A smaller wear track diameter can be understood as a lubricating oil composition excellent in wear resistance.

In the examples, a lubricating oil composition having a wear track diameter of less than 520 pm was evaluated as pass.

The results are shown in Tables 1 and 2.

**Table 1**

| | | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|---|
| | Copolymer | | | (X)-1 | (X)-2 | (X)-3 | (X)-4 | (X)-5 | (X)-6 | (X)-7 | (X)-8 | (X)-9 | (X)-10 | (X)-11 |
| | | Monomer (A) | Dodecyl acrylate | 71.4 | 71.4 | 71.4 | 71.4 | 35.7 | 35.7 | 84.0 | 71.0 | 0.0 | 71.4 | 71.5 |
| | | | Dodecyl methacrylate | 0.0 | 0.0 | 0.0 | 0.0 | 0.0 | 0.0 | 0.0 | 0.0 | 71.4 | 0.0 | 0.0 |
| | | | 2-Ethylhexyl acrylate | 0.0 | 0.0 | 0.0 | 0.0 | 35.7 | 0.0 | 0.0 | 0.0 | 0.0 | 0.0 | 0.0 |
| | | | Stearyl acrylate | 0.0 | 0.0 | 0.0 | 0.0 | 0.0 | 35.7 | 0.0 | 0.0 | 0.0 | 0.0 | 0.0 |
| | | Monomer (B) | 2-Hydroxyethyl acrylate | 10.7 | 10.7 | 0.0 | 0.0 | 10.7 | 10.7 | 8.0 | 11.0 | 0.0 | 10.7 | 10.7 |
| | | | 2-Hydroxyethyl methacrylate | 0.0 | 0.0 | 0.0 | 0.0 | 0.0 | 0.0 | 0.0 | 0.0 | 10.7 | 0.0 | 0.0 |
| | | | Carboxyethyl acrylate | 0.0 | 0.0 | 10.7 | 0.0 | 0.0 | 0.0 | 0.0 | 0.0 | 0.0 | 0.0 | 0.0 |
| | Monomer | | N-(3-(Dimethylamino)propyl) acrylamide | 0.0 | 0.0 | 0.0 | 10.7 | 0.0 | 0.0 | 0.0 | 0.0 | 0.0 | 0.0 | 0.0 |
| | (% by mass) | Monomer (C) | Benzyl acrylate | 17.9 | 17.9 | 17.9 | 17.9 | 17.9 | 17.9 | 8.0 | 0.0 | 0.0 | 14.3 | 10.7 |
| | | | Benzyl methacrylate | 0.0 | 0.0 | 0.0 | 0.0 | 0.0 | 0.0 | 0.0 | 0.0 | 17.9 | 0.0 | 0.0 |
| | | | Cyclohexyl acrylate | 0.0 | 0.0 | 0.0 | 0.0 | 0.0 | 0.0 | 0.0 | 18.0 | 0.0 | 0.0 | 0.0 |
| | | | Furfuryl acrylate | 0.0 | 0.0 | 0.0 | 0.0 | 0.0 | 0.0 | 0.0 | 0.0 | 0.0 | 3.6 | 0.0 |
| | | | Tetrahydrofurfuryl acrylate | 0.0 | 0.0 | 0.0 | 0.0 | 0.0 | 0.0 | 0.0 | 0.0 | 0.0 | 0.0 | 7.1 |
| | | Total content of monomer (A) | | 71.4 | 71.4 | 71.4 | 71.4 | 71.4 | 71.4 | 84.0 | 71.0 | 71.4 | 71.4 | 71.5 |
| | | Total content of monomer (B) | | 10.7 | 10.7 | 10.7 | 10.7 | 10.7 | 10.7 | 8.0 | 11.0 | 10.7 | 10.7 | 10.7 |
| | | Total content of monomer (C) | | 17.9 | 17.9 | 17.9 | 17.9 | 17.9 | 17.9 | 8.0 | 18.0 | 17.9 | 17.9 | 17.8 |
| Configuration of copolymer | | Total | | 100 | 100 | 100 | 100 | 100 | 100 | 100 | 100 | 100 | 100 | 100 |
| | | Monomer (A) | Dodecyl acrylate | 59.5 | 59.5 | 61.7 | 62.4 | 27.3 | 32.2 | 74.7 | 58.3 | 0.0 | 59.3 | 59.3 |
| | | | Dodecyl methacrylate | 0.0 | 0.0 | 0.0 | 0.0 | 0.0 | 0.0 | 0.0 | 0.0 | 60.5 | 0.0 | 0.0 |
| | | | 2-Ethylhexyl acrylate | 0.0 | 0.0 | 0.0 | 0.0 | 35.6 | 0.0 | 0.0 | 0.0 | 0.0 | 0.0 | 0.0 |
| | | | Stearyl acrylate | 0.0 | 0.0 | 0.0 | 0.0 | 0.0 | 23.9 | 0.0 | 0.0 | 0.0 | 0.0 | 0.0 |
| | | Monomer (B) | 2-Hydroxyethyl acrylate | 18.5 | 18.5 | 0.0 | 0.0 | 16.9 | 20.0 | 14.7 | 18.7 | 0.0 | 18.4 | 18.4 |
| | | | 2-Hydroxyethyl methacrylate | 0.0 | 0.0 | 0.0 | 0.0 | 0.0 | 0.0 | 0.0 | 0.0 | 17.7 | 0.0 | 0.0 |
| | | | Carboxyethyl acrylate | 0.0 | 0.0 | 15.4 | 0.0 | 0.0 | 0.0 | 0.0 | 0.0 | 0.0 | 0.0 | 0.0 |
| | Monomer | | N-(3-(Dimethylamino)propyl) acrylamide | 0.0 | 0.0 | 0.0 | 14.4 | 0.0 | 0.0 | 0.0 | 0.0 | 0.0 | 0.0 | 0.0 |
| | (% by mol) | Mononmer (C) | Benzyl acrylate | 22.0 | 22.0 | 22.9 | 23.1 | 20.2 | 23.9 | 10.5 | 0.0 | 0.0 | 17.6 | 13.2 |
| | | | Benzyl methacrylate | 0.0 | 0.0 | 0.0 | 0.0 | 0.0 | 0.0 | 0.0 | 0.0 | 21.8 | 0.0 | 0.0 |
| | | | Cyclohexyl acrylate | 0.0 | 0.0 | 0.0 | 0.0 | 0.0 | 0.0 | 0.0 | 23.0 | 0.0 | 0.0 | 0.0 |
| | | | Furfuryl acrylate | 0.0 | 0.0 | 0.0 | 0.0 | 0.0 | 0.0 | 0.0 | 0.0 | 0.0 | 4.7 | 0.0 |
| | | | Tetrahydrofurfuryl acrylate | 0.0 | 0.0 | 0.0 | 0.0 | 0.0 | 0.0 | 0.0 | 0.0 | 0.0 | 0.0 | 9.1 |
| | | Total content of monomer (A) | | 59.5 | 59.5 | 61.7 | 62.4 | 62.9 | 56.1 | 74.7 | 58.3 | 60.5 | 59.3 | 59.3 |
| | | Total content of monomer (B) | | 18.5 | 18.5 | 15.4 | 14.4 | 16.9 | 20.0 | 14.7 | 18.7 | 17.7 | 18.4 | 18.4 |
| | | Total content of monomer (C) | | 22.0 | 22.0 | 22.9 | 23.1 | 20.2 | 23.9 | 10.5 | 23.0 | 21.8 | 22.3 | 22.3 |
| | | Total | | 100 | 100 | 100 | 100 | 100 | 100 | 100 | 100 | 100 | 100 | 100 |
| | ((b)/(a)) (molar ratio) | | | 0.31 | 0.31 | 0.25 | 0.23 | 0.27 | 0.36 | 0.20 | 0.32 | 0.29 | 0.31 | 0.31 |
| | ((c)/(a)) (molar ratio) | | | 0.37 | 0.37 | 0.37 | 0.37 | 0.32 | 0.43 | 0.14 | 0.40 | 0.36 | 0.38 | 0.38 |
| Molecular weight, etc. of copolymer | Mn | | | 18000 | 17000 | 20000 | 19000 | 14000 | 14000 | 14000 | 15000 | 39000 | 19000 | 20000 |
| | Mw | | | 26000 | 27000 | 28000 | 34000 | 27000 | 32000 | 24000 | 25000 | 83000 | 34000 | 35000 |
| | Mw/Mn | | | 1.44 | 1.59 | 1.40 | 1.79 | 1.93 | 2.29 | 1.71 | 1.67 | 2.13 | 1.79 | 1.75 |
| Properties and evaluation of lubricating oil composition | 100°C kinematic viscosity (unit: mm²/s) | | | 5.50 | 5.50 | 5.50 | 5.50 | 5.50 | 5.50 | 5.50 | 5.50 | 5.60 | 5.50 | 5.50 |
| | Solubility in base oil | | | A | A | A | A | A | A | A | A | A | A | A |
| | Average wear track diameter (unit: µm) | | | 446 | 479 | 484 | 454 | 445 | 423 | 482 | 463 | 485 | 450 | 455 |

**Table 2**

| | | | | Comparative Example 1 | Comparative Example 2 | Comparative Example 3 | Comparative Example 4 | Comparative Example 5 |
|---|---|---|---|---|---|---|---|---|
| | Copolymer | | | (X')-1 | (X')-2 | (X')-3 | (X')-4 | (X')-5 |
| | | Monomer (A) | Dodecyl acrylate | 88.0 | 100.0 | 75.0 | 80.0 | 55.6 |
| | | | Dodecyl methacrylate | 0.0 | 0.0 | 0.0 | 0.0 | 0.0 |
| | | | 2-Ethylhexyl acrylate | 0.0 | 0.0 | 0.0 | 0.0 | 0.0 |
| | | | Stearyl acrylate | 0.0 | 0.0 | 0.0 | 0.0 | 0.0 |
| | | Monomer (B) | 2-Hydroxyethyl acrylate | 0.0 | 0.0 | 0.0 | 20.0 | 16.7 |
| | | | 2-Hydroxyethyl methacrylate | 0.0 | 0.0 | 0.0 | 0.0 | 0.0 |
| | | | Carboxyethyl acrylate | 0.0 | 0.0 | 0.0 | 0.0 | 0.0 |
| | Monomer | | N-(3-(Dimethylamino)propyl) acrylamide | 12.0 | 0.0 | 0.0 | 0.0 | 0.0 |
| | (% by mass) | Monomer (C) | Benzyl acrylate | 0.0 | 0.0 | 25.0 | 0.0 | 27.8 |
| | | | Benzyl methacrylate | 0.0 | 0.0 | 0.0 | 0.0 | 0.0 |
| | | | Cyclohexyl acrylate | 0.0 | 0.0 | 0.0 | 0.0 | 0.0 |
| | | | Furfuryl acrylate | 0.0 | 0.0 | 0.0 | 0.0 | 0.0 |
| | | | Tetrahydrofurfuryl acrylate | 0.0 | 0.0 | 0.0 | 0.0 | 0.0 |
| | | Tota content of monomer (A) | | 88.0 | 100.0 | 75.0 | 80.0 | 55.6 |
| | | Total content of monomer (B) | | 12.0 | 0.0 | 0.0 | 20.0 | 16.7 |
| | | Total content of monomer (C) | | 0.0 | 0.0 | 25.0 | 0.0 | 27.8 |
| Configuration of copolymer | | Total | | 100 | 100 | 100 | 100 | 100 |
| | | Monomer (A) | Dodecyl acrylate | 82.7 | 100.0 | 66.9 | 65.9 | 42.3 |
| | | | Dodecyl methacrylate | 0.0 | 0.0 | 0.0 | 0.0 | 0.0 |
| | | | 2-Ethylhexyl acrylate | 0.0 | 0.0 | 0.0 | 0.0 | 0.0 |
| | | | Stearyl acrylate | 0.0 | 0.0 | 0.0 | 0.0 | 0.0 |
| | | Monomer (B) | 2-Hydroxyethyl acrylate | 0.0 | 0.0 | 0.0 | 34.1 | 26.3 |
| | | | 2-Hydroxyethyl methacrylate | 0.0 | 0.0 | 0.0 | 0.0 | 0.0 |
| | | | Carboxyethyl acrylate | 0.0 | 0.0 | 0.0 | 0.0 | 0.0 |
| | Monomer | | N-(3-(Dimethylamino)propyl) acrylamide | 17.3 | 0.0 | 0.0 | 0.0 | 0.0 |
| | (% by mol) | Monomer (C) | Benzyl acrylate | 0.0 | 0.0 | 33.1 | 0.0 | 31.4 |
| | | | Benzyl methacrylate | 0.0 | 0.0 | 0.0 | 0.0 | 0.0 |
| | | | Cyclohexyl acrylate | 0.0 | 0.0 | 0.0 | 0.0 | 0.0 |
| | | | Furfuryl acrylate | 0.0 | 0.0 | 0.0 | 0.0 | 0.0 |
| | | | Tetrahydrofurfuryl acrylate | 0.0 | 0.0 | 0.0 | 0.0 | 0.0 |
| | | Tota content of monomer (A) | | 82.7 | 100.0 | 66.9 | 65.9 | 42.3 |
| | | Total content of monomer (B) | | 17.3 | 0.0 | 0.0 | 34.1 | 26.3 |
| | | Total content of monomer (C) | | 0.0 | 0.0 | 33.1 | 0.0 | 31.4 |
| | | Total | | 100 | 100 | 100 | 100 | 100 |
| | ((b)/(a)) (molar ratio) | | | 0.21 | 0.00 | 0.00 | 0.52 | 0.62 |
| | ((c)/(a)) (molar ratio) | | | 0.00 | 0.00 | 0.49 | 0.00 | 0.74 |
| Molecular weight, etc. of copolymer | Mn | | | 22000 | 20000 | 24000 | 18000 | 20000 |
| | Mw | | | 34000 | 30000 | 35000 | 28000 | 40000 |
| | Mw/Mn | | | 1.55 | 1.50 | 1.46 | 1.56 | 2.00 |
| Properties and evaluation of lubricating oil composition | 100°C kinematic viscosity (unit: mm²/s) | | | 5.50 | 5.50 | 5.50 | 5.50 | 5.50 |
| | Solubility in base oil | | | A | A | A | A | B |
| | Average wear track diameter (unit: µm) | | | 533 | 565 | 524 | 520 | 458 |

The following matters are understood from Table 1.

It is understood from the results shown in Examples 1 to 11 that the copolymer that contains the structural unit (a) derived from the monomer (A) having a (meth)acryloyl group and a linear or branched alkyl group having 6 or more and 24 or less carbon atoms, the structural unit (b) derived from the monomer (B) having a (meth)acryloyl group and a polar group, and the structural unit (c) derived from the monomer (C) having a polymerizable functional group and a cyclic structure group, and has a content of the structural unit (a) of 43% by mol or more based on the total structural units of the copolymer (X) and a mass average molecular weight (Mw) of 5,000 or more and 90,000 or less is excellent in solubility in a lubricant base oil (mineral oil) and can impart sufficient wear resistance to the lubricating oil composition.

The following matters are understood from Table 2.

It is understood from the results shown in Comparative Example 2 that the copolymer that contains the structural unit (a) derived from the monomer (A) having a (meth)acryloyl group and a linear or branched alkyl group having 6 or more and 24 or less carbon atoms, but does not contain the structural unit (b) derived from the monomer (B) having a (meth)acryloyl group and a polar group and the structural unit (c) derived from the monomer (C) having a polymerizable functional group and a cyclic structure group cannot impart sufficient wear resistance to the lubricating oil composition although the solubility in a lubricant base oil is excellent.

It is understood from the results shown in Comparative Examples 1 and 4 that the copolymer that contains the structural unit (a) derived from the monomer (A) having a (meth)acryloyl group and a linear or branched alkyl group having 6 or more and 24 or less carbon atoms and the structural unit (b) derived from the monomer (B) having a (meth)acryloyl group and a polar group, but does not contain the structural unit (c) derived from the monomer (C) having a polymerizable functional group and a cyclic structure group also cannot impart sufficient wear resistance to the lubricating oil composition although the solubility in a lubricant base oil is excellent.

It is understood from the results shown in Comparative Example 3 that the copolymer that contains the structural unit (a) derived from the monomer (A) having a (meth)acryloyl group and a linear or branched alkyl group having 6 or more and 24 or less carbon atoms and the structural unit (c) derived from the monomer (C) having a polymerizable functional group and a cyclic structure group, but does not contain the structural unit (b) derived from the monomer (B) having a (meth)acryloyl group and a polar group cannot impart sufficient wear resistance to the lubricating oil composition although the solubility in a lubricant base oil is excellent.

It is understood from the results shown in Comparative Example 5 that even the copolymer that contains the structural unit (a) derived from the monomer (A) having a (meth)acryloyl group and a linear or branched alkyl group having 6 or more and 24 or less carbon atoms, the structural unit (b) derived from the monomer (B) having a (meth)acryloyl group and a polar group, and the structural unit (c) derived from the monomer (C) having a polymerizable functional group and a cyclic structure group is inferior in solubility in a lubricant base oil in the case where the content of the structural unit (a) is less than 43% by mol based on the total structural units of the copolymer.

## Claims

1. A lubricating oil additive composition comprising a copolymer (X) containing the following structural units (a) to (c):
- a structural unit (a): a structural unit derived from a monomer (A) having a (meth)acryloyl group and a linear or branched alkyl group having 6 or more and 24 or less carbon atoms,
- a structural unit (b): a structural unit derived from a monomer (B) having a (meth)acryloyl group and a polar group, and
- a structural unit (c): a structural unit derived from a monomer (C) having a polymerizable functional group and a cyclic structure group,
the copolymer (X) having
a content of the structural unit (a) of 43% by mol or more based on the total structural units of the copolymer (X), and
a mass average molecular weight (Mw) of 5,000 or more and 90,000 or less.

2. The lubricating oil additive composition according to claim 1, wherein the structural unit (a) contains a structural unit (a1) derived from a monomer (A1) represented by the following general formula (a-1): 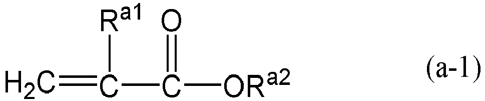 wherein in the general formula (a-1), R^{a1} represents a hydrogen atom or a methyl group, and R^{a2} represents a linear or branched alkyl group having 6 or more and 24 or less carbon atoms.

3. The lubricating oil additive composition according to claim 1 or 2, wherein the structural unit (b) contains a structural unit (b1) derived from a monomer (B 1) having one or more kind of a group selected from the group consisting of a nitrogen atom-containing group, a hydroxy group, and a carboxy group as the polar group.

4. The lubricating oil additive composition according to any one of claims 1 to 3, wherein the structural unit (b) has a content of a structural unit (b2) derived from a monomer (B2) having a polyoxyalkylene group as the polar group of less than 5% by mol based on the total structural units of the structural unit (b).

5. The lubricating oil additive composition according to any one of claims 1 to 4, wherein the polymerizable functional group of the monomer (C) is a (meth)acryloyl group or a vinyl group.

6. The lubricating oil additive composition according to any one of claims 1 to 5, wherein the structural unit (c) contains a structural unit (c1) derived from a monomer (C 1) having one or more kind of a cyclic structure selected from the group consisting of the following items (I) to (III) as a cyclic structure in the cyclic structure group:
(I) an aromatic ring having 6 or more and 14 or less ring carbon atoms,
(II) an alicyclic ring having 3 or more and 14 or less ring carbon atoms, and
(III) a heterocyclic ring containing one or more kind of a hetero atom selected from the group consisting of a nitrogen atom and an oxygen atom, having 3 or more and 14 or less ring atoms.

7. The lubricating oil additive composition according to any one of claims 1 to 6, wherein the copolymer (X) has a content of the structural unit (b) derived from the monomer (B) of 9% by mol or more based on the total structural units of the copolymer (X).

8. The lubricating oil additive composition according to any one of claims 1 to 7, wherein the copolymer (X) has a content of the structural unit (c) derived from the monomer (C) of 7% by mol or more and 30% by mol or less based on the total structural units of the copolymer (X).

9. The lubricating oil additive composition according to any one of claims 1 to 8, wherein the lubricating oil additive composition is used as a friction modifier.

10. A use method comprising using the lubricating oil additive composition according to any one of claims 1 to 8 as a friction modifier.

11. A lubricating oil composition comprising the lubricating oil additive composition according to any one of claims 1 to 9 and a lubricant base oil.

12. A method for producing the lubricating oil additive composition according to claim 1, comprising
a step (S) of producing a copolymer (X) through polymerization of the following monomers (A) to (C):
- a monomer (A): a monomer having a (meth)acryloyl group and a linear or branched alkyl group having 6 or more and 24 or less carbon atoms,
- a monomer (B): a monomer having a (meth)acryloyl group and a polar group, and
- a monomer (C): a monomer having a polymerizable functional group and a cyclic structure group.
